(19)

**Europäisches Patentamt**
**European Patent Office**
**Office européen des brevets**

(11)  **EP 4 452 479 B1**

(12)  **EUROPEAN PATENT SPECIFICATION**

(45) Date of publication and mention
of the grant of the patent:
**17.09.2025  Bulletin 2025/38**

(21) Application number: **22843322.3**

(22) Date of filing: **22.12.2022**

(51) International Patent Classification (IPC):
$B01J\ 21/06^{(2006.01)}$      $B01J\ 37/03^{(2006.01)}$
$B01J\ 20/02^{(2006.01)}$      $B01J\ 20/06^{(2006.01)}$
$B01J\ 23/06^{(2006.01)}$      $B01J\ 23/10^{(2006.01)}$
$B01J\ 37/08^{(2006.01)}$      $B01J\ 20/30^{(2006.01)}$

(52) Cooperative Patent Classification (CPC):
**B01J 37/033; B01J 20/06; B01J 20/3085;**
**B01J 21/066; B01J 23/06; B01J 23/10;**
**B01J 37/082;** Y02C 20/40

(86) International application number:
**PCT/EP2022/087421**

(87) International publication number:
**WO 2023/118406 (29.06.2023 Gazette 2023/26)**

(54) **PROCESS FOR CATALYTIC CO2 DESORPTION AND CATALYST FOR SAID PROCESS**

VERFAHREN ZUR KATALYTISCHEN CO2-DESORPTION UND KATALYSATOR FÜR DIESES
VERFAHREN

PROCÉDÉ DE DÉSORPTION CATALYTIQUE DE CO2 ET CATALYSEUR POUR LEDIT PROCÉDÉ

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **23.12.2021  EP 21306913**

(43) Date of publication of application:
**30.10.2024  Bulletin 2024/44**

(73) Proprietor: **TotalEnergies OneTech**
**92400 Courbevoie (FR)**

(72) Inventors:
• **KUMAR, Parveen**
**1140 Evere (BE)**
• **LACROIX, Maxime**
**76310 Sainte-Adresse (FR)**

• **SELS, Bert**
**2260 Westerlo (BE)**
• **ZHOU, Cheng**
**3001 Leuven (BE)**
• **LIAO, Yuhe**
**Guangzhou, Guangdong 510640 (CN)**

(74) Representative: **De Clercq & Partners**
**Edgard Gevaertdreef 10a**
**9830 Sint-Martens-Latem (BE)**

(56) References cited:
**WO-A1-2015/099053      KR-A- 20200 011 761**
**US-A1- 2010 209 323      US-A1- 2016 250 591**

Remarks:
The file contains technical information submitted
after the application was filed and not included in this
specification

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

**FIELD OF THE INVENTION**

The present invention relates to a process for $CO_2$ desorption in an overall $CO_2$ absorption/desorption procedure. The present invention in particular relates to a process and a system for the catalytic $CO_2$ desorption steps, in the presence of at least one Zr-based catalyst. The present invention also relates to a suitable Zr-based catalyst for the $CO_2$ desorption process, and to methods for preparing such a catalyst.

**BACKGROUND**

The rapidly increasing carbon dioxide ($CO_2$) concentration in the atmosphere has caused great climate changes. From the latest report of the Intergovernmental Panel on Climate Change (IPCC), limiting warming to close to 1.5°C or even 2°C will be beyond reach, unless there are immediate, rapid, and large-scale reductions in $CO_2$ emissions. However, the risks and cost of non-fossil energy alternatives such as nuclear, biomass, solar energy, etc., cannot meet current energy demands. Additionally, any rapid changes to non-fossil energy sources, even if possible, would result in large disruptions to the existing energy supply infrastructure with substantial consequences to the global economy. The fossils fuel energy is believed to remain the dominant energy source from the Energy Information Administration. Under that premise, $CO_2$ capture and storage (CCS) and $CO_2$ capture and utilization (CCU) become promising routes to limit the savagely increasing $CO_2$ emission. However, for both routes, $CO_2$ capture is always the first step. In order to meet mid-to-long-term $CO_2$ reduction targets, it is necessary to develop a cost-effective $CO_2$ capture technology.

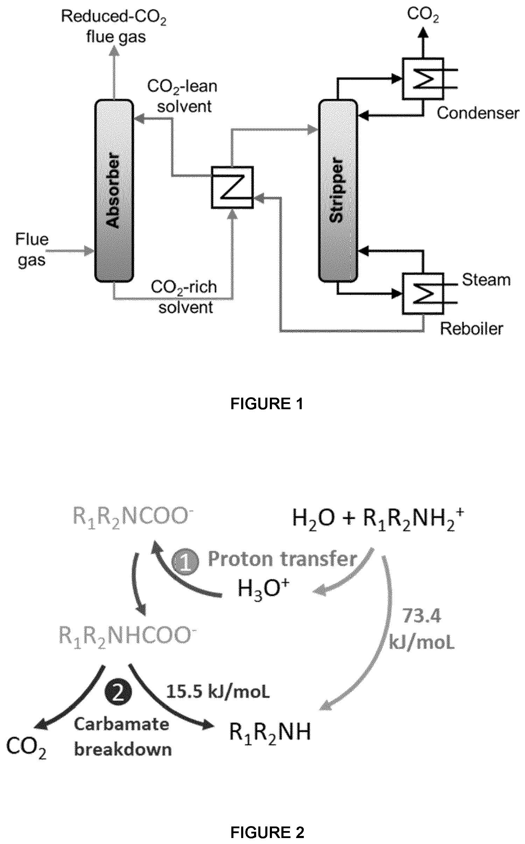

For the $CO_2$ from power plants, one of the dominant $CO_2$ emission sources, Post-Combustion Capture (PCC), using amine solvent as a $CO_2$ absorber, is the most mature and widely used technology. Moreover, it is believed to be the most promising technology to provide an energy-efficient and timely solution for decreasing $CO_2$ emissions from fossil power plants. A typical amine-based $CO_2$ capture and regeneration process involves the entire absorption-desorption cycle of $CO_2$ using amine solvents, as shown in **Figure 1.** The $CO_2$-containing flue gas stream is introduced into a packed bed absorber column where it flows counter currently as it contacts lean amine, allowing for efficient absorption. After absorption, the rich amine solvent flows through a rich-lean heat exchanger before being introduced into a stripper column for thermal regeneration. In the stripper column, heated steam is supplied to strip out the captured $CO_2$ and increase the temperature. This free (lean) amine solvent then returns to the absorber column for a new cycle of absorption.

Typical amine solvents for $CO_2$ capture include primary amines like monoethanolamine (MEA), secondary amines like diethanolamine (DEA), and tertiary amines like methyldiethanolamine (MDEA). The mechanism of $CO_2$ absorption in different amine solvents is shown as follows:

Primary/ secondary amine:

$$CO_2 + 2R_1R_2NH \leftrightarrow 2R_1R_2NH_2 + + R_1R_2NCOO^-$$

Tertiary amine:

$$CO_2 + R_1R_2R_3N + H_2O \leftrightarrow R_1R_2R_3NH^+ + HCO_3^-$$

MEA is the most widely used amine solvent because of the tremendous $CO_2$ absorption rate, high capacity, high mass-transfer performance, and low-price properties. The absorption of $CO_2$ in MEA solvent follows a Zwitterion mechanism. One $CO_2$ is absorbed and forms one carbamate and one protonated MEA. As shown in **Figure 2,** the desorption route of $CO_2$ from MEA mainly comprises two steps: (1) proton transfer, which includes proton transferring from protonated amine to water and proton transferring from $H_3O^+$ to carbamate; (2) carbamate breakdown and release of $CO_2$. The proton transfer steps are unfavorable at low temperatures, forcing the industry to run under a high desorption temperature for an acceptable solvent regeneration efficiency. However, the high regeneration temperature (100-140°C) consumes more than 60% of the overall energy cost for PCC, and also causes degradation of amine solvent and corrosion of equipment.

Extensive studies have been carried out to reduce the energy cost during the solvent regeneration step of the primary amine. New amine solvents and bi-phasic amine solvents can significantly reduce the energy cost during desorption while maintaining a relatively high $CO_2$ absorption rate. However, they are still economically inefficient due to the high price of the solvent and complex reactor.

From a catalytic perspective, using a proper catalyst can decrease the activation energy of $CO_2$ desorption and

boost the reaction rate, thereby decreasing the stripping time and increasing the solvent regeneration efficiency. Moreover, some catalysts allow $CO_2$ desorption at a temperature lower than 100°C, which could significantly reduce the energy consumption and solvent loss.

WO 2011120138 discloses a method, which applies solid catalysts into the $CO_2$ absorption and desorption process. It was reported that by using an acid catalyst like H-ZSM-5 in the stripper, $CO_2$ desorption from 5 M MEA solvent could be detected at a temperature lower than 50°C. The reason for low-temperature desorption is considered to be the direct donation of the proton from the Brønsted acid (B acid) site of H-ZSM-5 to carbonates. The catalyst performance between the B acid site and the Lewis acid (L acid) site with H-ZSM-5 and $\gamma$-$Al_2O_3$ was also compared. B acid catalysts like H-ZSM-5 showed better performance on $CO_2$ desorption than Lewis acid catalysts like $\gamma$-$Al_2O_3$ during the $CO_2$ rich stage (temperature ramping stage) but showed poorer performance during $CO_2$ lean stage (isothermal stage). There are many following reports on using solid acid catalysts, like HY, H-Beta, $CeSO_4/ZrO_2$, $CMK$-3-$SiO_2$, $SO_4^{2-}/ZrO_2/SBA$-15 for $CO_2$ desorption from amine solvent.

US2016030880A1 discloses a series of metal oxides which increase the $CO_2$ desorption amount from 3 M MEA. It also used acidic material (metal oxide, zeolites, proton-exchange resins) to help amine regeneration. The metal oxides contained metals from rows 3-5 in the Periodic Table. $V_2O_5$, $MoO_3$, $WO_3$, $Cr_2O_3$, MgO, $\gamma$-$Al_2O_3$, $VO_x/Al_2O_3$, $MoO_x/Al_2O_3$, $WO_x/Al_2O_3$, H-zeolite-Y, proton-exchange resin (Amberlyst 15 (H)) were tested. Among other materials, $MoO_3$ showed the best catalytic performance, which caused $CO_2$ desorption to start at 40°C and increased $CO_2$ desorption amount by 27%. However, almost 96% of $MoO_3$ dissolved during the reaction. The dissolving amount decreased to 68% after using $\gamma$-$Al_2O_3$ as support. However, the $CO_2$ desorption amount also decreased. It seems that the improvement of the desorption is highly related to the dissolution of the metal oxide. This increased the difficulties on catalyst separation after the solvent regeneration process, which greatly limited the application for those types of catalysts.

US20160250591A1 reports $TiO(OH)_2$ as an efficient catalyst for $CO_2$ desorption from amine solvent. $TiO(OH)_2$ can drastically improve the $CO_2$ desorption rate of a $CO_2$-saturated 20% MEA solution by 100% during the temperature ramping stage at a low temperature of 88°C, which was much higher than the previous catalysts investigated.

US2010/209323A1 discloses DeNOx catalysts for the reduction of NOx compounds and porous catalyst support materials are provided. The inventive catalysts comprise an active metal catalyst component and mixed $TiO_2/ZrO_2$ porous support particles that comprise a) a crystalline phase comprising titanium dioxide and/or a titanium/zirconium mixed oxide, b) an amorphous phase comprising zirconium, and c) a small amount of one or more metal oxide(s) or metalloid oxide(s) deposited on the amorphous outer layer. The inventive catalysts exhibit superior activity and ammonia selectivity.

According to the reported results, using solid catalyst has already shown some improvement on low-temperature $CO_2$ desorption from amine solvent but still cannot meet the application requirement due to the limitation of poor catalytic performance or catalyst dissolution problems. An undissolved solid catalyst with better and stable catalytic performance is strongly needed to decrease the energy consumption of the amine regeneration process for PPC.

Therefore, there is a need for improved catalysts and improved processes for $CO_2$ desorption.

## SUMMARY OF THE INVENTION

It has now been found that the above objectives can be attained either individually or in any combination by using the specific and well-defined processes and catalysts as disclosed herein.

The Applicants have developed a Zr-based catalyst, preferably comprising $ZrO(OH)_2$, and a method for preparing said catalyst. This catalyst shows advantageous properties when applied in a $CO_2$ desorption process. For example, the catalytic activity of catalysts according to the invention, and embodiments thereof, is far greater than any previously reported catalyst. The catalytic activity increases with increase in catalytic loading. The catalytic action is confirmed as the catalytic activity is maintained over cycles. The present invention, and embodiments thereof, also allows for a reduction in size of the desorption column leading to lower CAPEX. The present invention, and embodiments thereof, also allows for a reduction in temperature of $CO_2$ desorption, which in turn leads to lower energy requirements (OPEX). The present invention, and embodiments thereof, also allows to reduce the cost of regeneration of solvents in the absorption process.

More specifically, the Applicants have found that a fine designed undissolved solid Zr-based catalyst according to the invention, or embodiments thereof, allows to increase the $CO_2$ desorption rate under low temperature in the solvent regeneration process for the amine-based $CO_2$ Post-Combustion Process. The catalyst material preferably comprises a specific O:Zr atomic ratio. The catalyst material preferably comprises $ZrO(OH)_2$, and/or is synthesized under a preferred pH with a preferred basic precipitating agent.

The Applicants have demonstrated that a Zr-based catalyst according to the invention can boost the $CO_2$ desorption rate at a low temperature. The synthesis method influences the ratio of acid and basic hydroxyl groups and the surface charge property, which is demonstrated herein to cause an additional improvement in catalytic performance.

The catalysts prepared according to the invention, or embodiments thereof, can be used in MEA solvent and other amines in a $CO_2$ capture plant. The boosting of $CO_2$ desorption rate with the catalysts makes it possible for the solvent regeneration process to run under a lower temperature which can significantly decrease the energy cost of PPC and prevent the amine solution from degradation and evaporation. The catalyst is stable and insolubilized in amine solvent, which makes it easy to be separated and regenerated. Furthermore, the catalyst can be deposited on a structured support (inert packing) to replace traditional packing, or can be shaped in solid structure to replace traditional packing.

In a first aspect, the present invention provides a method for preparing a Zr-based catalyst for $CO_2$ desorption, the catalyst preferably comprising $ZrO(OH)_2$. The method comprises the steps of:

- mixing a solution comprising a basic precipitating agent into a solution comprising a Zr source, thereby preparing a synthesis solution; and,
- precipitating the Zr-based catalyst, preferably comprising $ZrO(OH)_2$, from the synthesis solution, thereby obtaining a precipitated Zr-based catalyst.

The method is characterized in that the pH of the synthesis solution is least 4 and at most 7, for example about 5.

The Zr-based catalyst comprises Zr, O, and H. The O:Zr atomic ratio is at least 2.1, preferably at least 2.2, for example at least 2.3, for example at least 2.4, for example at least 2.5, for example at least 2.6, for example at least 2.7, for example at least 2.8, for example at least 2.9. In some embodiments, the O:Zr atomic ratio is at least 3.0, for example at least 3.5, for example at least 4.0.

In some preferred embodiments, the Zr-based catalyst comprises $ZrO(OH)_2$. The precipitated Zr-based catalyst comprises at least 90% by weight $ZrO(OH)_2$ compared to the total weight of the precipitated Zr-based catalyst, for example at least 95%, for example at least 98%, for example at least 99%.

In some preferred embodiments, the basic precipitating agent is a hydroxide, preferably selected from the group comprising: NaOH, $NH_4OH$ ($NH_3{}^*H_2O$), and KOH. Preferably, the basic precipitating agent is NaOH.

In some preferred embodiments, the Zr source is $ZrO(NO_3)_2$.

In some preferred embodiments, the method further comprises the step of:

- calcining the precipitated Zr-based catalyst at a calcination temperature Tc.

Preferably, the calcination temperature Tc is at most 400°C, preferably at most 350°C, preferably at most 300°C.

In a second aspect, the present invention provides a Zr-based catalyst for $CO_2$ desorption, prepared using the method according to the first aspect, and embodiments thereof. The O:Zr atomic ratio is at least 2.1. The Zr-based catalyst comprises $ZrO(OH)_2$.

(Preferred) embodiments of the first aspect are also (preferred) embodiments of the second aspect, and vice versa.

In some preferred embodiments, the ratio of acidic OH to basic OH of the Zr-based catalyst is at least 0.1 and at most 1.3, preferably at least 0.2 to at most 1.2, preferably at least 0.5 to at most 1.2, preferably at least 0.8 to at most 1.1, preferably about 1.0.

In some preferred embodiments, the Zr-based catalyst has a surface charge Zeta potential of at least -25 mV, preferably at least -15 mV, preferably at least -5 mV, for example at least 0 mV, for example at least 5 mV.

In some preferred embodiments, the Zr-based catalyst comprises other metals, preferably selected from the group comprising: Hf, Ce, or Zn. In some preferred embodiments, the purity of Zr compared to the other metals in the Zr-based catalyst is at least 80%, preferably at least 85%, preferably at least 90%, preferably at least 95%.

In a third aspect, the present invention provides a process for $CO_2$ desorption from an amine solvent. The process preferably comprises the steps of:

- providing an $CO_2$-containing amine solution comprising $CO_2$ absorbed in an amine solvent;
- supplying a Zr-based catalyst according to the second aspect, and embodiments thereof, to the $CO_2$-containing amine solution;
- heating the amine solution comprising the Zr-based catalyst to a desorption temperature Td; and,
- desorbing $CO_2$ from the amine solution comprising the Zr-based catalyst during a residence time.

(Preferred) embodiments of the second aspect are also (preferred) embodiments of the third aspect, and vice versa.

In some preferred embodiments, the Zr-based catalyst acts as a non-solubilized heterogeneous catalyst.

In some preferred embodiments, the amine solvent comprises a primary amine, secondary amine, or tertiary amine. Preferably, the amine solvent comprises monoethanolamine (MEA) or 2-amino-2-methyl-1-propanol (AMP), preferably monoethanolamine (MEA).

In some preferred embodiments, the residence time is at least 4 h and at most 168 h, preferably at least 8 h and at most 72 h, preferably at least 16 h and at most 48 h, preferably at least 20 h and at most 36 h, for example about 24 h.

In a fourth aspect, the present invention provides a process for $CO_2$ absorption and desorption. Preferably, the process comprises the steps of:

- absorbing $CO_2$ in an amine solvent, thereby obtaining a $CO_2$-containing amine solution; and,
- desorbing $CO_2$ from the $CO_2$-containing amine solution using the process according to the third aspect, or embodiments thereof, thereby regenerating the amine solvent.

(Preferred) embodiments of the third aspect are also (preferred) embodiments of the fourth aspect, and vice versa.

In a fifth aspect, the present invention provides the use of a Zr-based catalyst, preferably a catalyst according to the second aspect, or embodiments thereof, in a process according to the third or fourth aspect, or embodiments thereof.

(Preferred) embodiments of the second, third, or fourth aspect are also (preferred) embodiments of the fifth aspect, and vice versa.

## BRIEF DESCRIPTION OF THE FIGURES

**Figure 1** illustrates a carbon capture process schematic.

**Figure 2** shows the reaction route for $CO_2$ desorption from a primary and secondary amine solvent.

**Figure 3** illustrates a schematic lab-scale $CO_2$ desorption apparatus.

**Figure 4** illustrates (A) $CO_2$ loading concentration versus reaction time and (B) a kinetic study during the isothermal stage in 5 M $CO_2$-saturated MEA with different catalysts.

**Figure 5** illustrates (A) $CO_2$ loading concentration versus reaction time, (B) a kinetic study during the isothermal stage in 5 M $CO_2$-saturated MEA with different loading amounts of $ZrO(OH)_2$, and (C) the relationship between catalytic reaction rate constant (kCAT) and catalyst loading amount.

**Figure 6** illustrates (A) a scheme for solvent recycled experiment, (B) $CO_2$ loading concentration versus reaction time, and (C) a kinetic study of kCAT during the isothermal stage in recycled MEA solvent without solid catalysts.

**Figure 7** illustrates the $CO_2$ desorption in 5 M $CO_2$-saturated MEA solution for a 168 h reaction with and without $ZrO(OH)_2$.

**Figure 8** illustrates (A) a scheme of two catalyst regeneration methods: wash recycled and directly recycled, (B) $CO_2$ loading concentration versus reaction time in 5 M $CO_2$-saturated MEA with $ZrO(OH)_2$ regenerated by different methods.

**Figure 9** illustrates (A) $CO_2$ loading concentration versus reaction time in 5 M $CO_2$-saturated MEA with $ZrO(OH)_2$ synthesized under different pH, and (B) the relationship between kCAT and the synthesis pH of $ZrO(OH)_2$.

**Figure 10** illustrates (A) $CO_2$ loading concentration versus reaction time and (B) a kinetic study during the isothermal stage in 5 M $CO_2$-saturated MEA with $ZrO(OH)_2$ synthesized by different methods.

**Figure 11** illustrates a thermogravimetric analysis (TGA) result of the $ZrO(OH)_2$ catalyst under $N_2$ atmosphere.

**Figure 12** illustrates the relationship between $ZrO(OH)_2$ synthesis pH and density of basicity -OH, acidity -OH and total -OH.

**Figure 13** illustrates the relationship between kCAT and the Acidity -OH/ Basicity -OH ratio.

**Figure 14** illustrates (A) $CO_2$ loading concentration versus reaction time, and (B) a kinetic study during the isothermal stage in 5 M CO2-saturated MEA with $ZrO(OH)_2$ calcined under different temperatures.

**Figure 15** illustrates the XRD results of commercial $ZrO_2$ and different-temperature-calcined $ZrO(OH)_2$.

**Figure 16** illustrates (A) $CO_2$ loading concentration versus reaction time and (B) a kinetic study during the isothermal stage in 5 M $CO_2$-saturated MEA with different $MZrO(OH)_2$ catalysts.

**Figure 17** illustrates the relationship between kCAT and Zeta potential of different $ZrO(OH)_2$ based catalysts at pH 9.3.

**Figure 18** illustrates (A) $CO_2$ loading concentration versus reaction time and (B) a kinetic study during the isothermal stage in 2.5 M $CO_2$-saturated AMP with and without different catalyst.

**Figure 1** illustrates a scheme for a continual $CO_2$ desorption reactor.

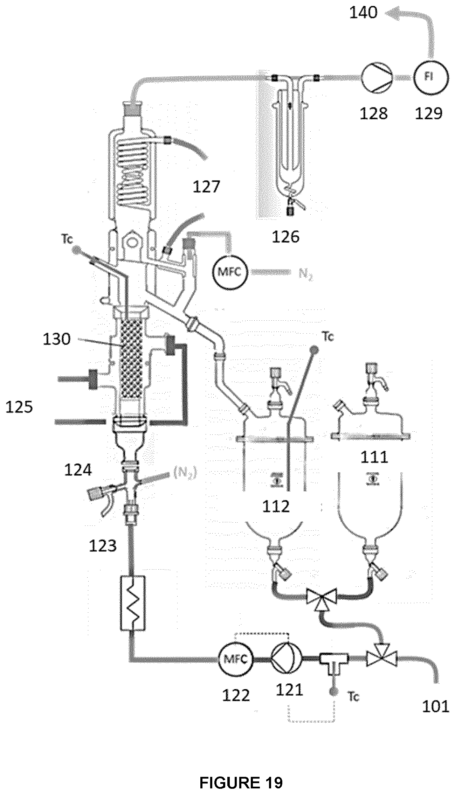

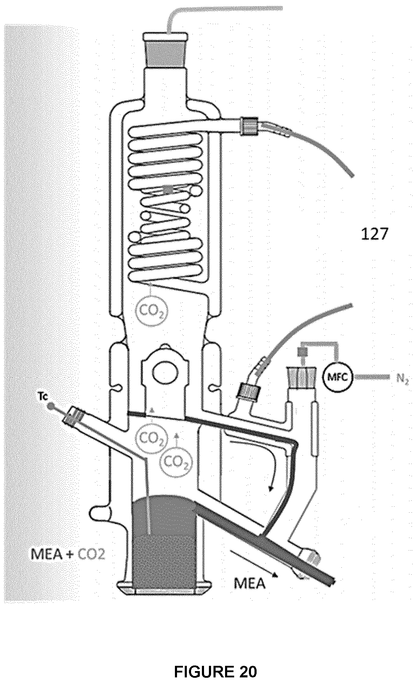

**Figure 20** illustrates a zoomed in section of the scheme for a continual $CO_2$ desorption reactor illustrated in **Figure 19.**

## DETAILED DESCRIPTION OF THE INVENTION

When describing the invention, the terms used are to be construed in accordance with the following definitions, unless a context dictates otherwise.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, various aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous. Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art.

The terms "comprising", "comprises" and "comprised of" as used herein are synonymous with "including", "includes" or "containing", "contains", and are inclusive or open-ended and do not exclude additional, non-recited members, elements, or method steps. It will be appreciated that the terms "comprising", "comprises" and "comprised of" as used herein comprise the terms "consisting of", "consists" and "consists of".

As used in the specification and the appended claims, the singular forms "a", "an," and "the" include plural referents unless the context clearly dictates otherwise. By way of example, "a step" means one step or more than one step.

Unless defined otherwise, all technical and scientific terms used herein have the same meaning as is commonly understood by one of skill in the art.

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of endpoints also includes the end point values themselves (e.g. from 1.0 to 5.0 includes both 1.0 and 5.0). Any numerical range recited herein is intended to include all sub-ranges subsumed therein.

The term "about" as used herein when referring to a measurable value such as a parameter, an amount, a temporal duration, and the like, is meant to encompass variations of +/-10% or less, preferably +/-5% or less, more preferably +/-1% or less, of and from the specified value, insofar such variations are appropriate to perform in the disclosed invention. It is to be understood that the value to which the modifier "about" refers is itself also specifically, and preferably, disclosed.

The terms "wt%", "vol%", or "mol%" refers to a weight percentage of a component, a volume percentage of a component, or molar percentage of a component, respectively, based on the total weight, the total volume of material, or total moles, which includes the component. When describing the present invention, the terms used are to be construed in accordance with the following definitions, unless a context dictates otherwise.

Preferred features, embodiments, and uses of this invention are set herein below. Each embodiment of the invention so defined may be combined with any other embodiment unless clearly indicated to the contrary. In particular, any feature indicated as being preferred or advantageous may be combined with any other feature or features indicated as being preferred or advantageous. Hereto, the present invention is in particular captured by any one or any combination of one or more of the below embodiments, with any other aspect and/or embodiment.

In a first aspect, the present invention provides a method for preparing a Zr-based catalyst for $CO_2$ desorption, the catalyst preferably comprising $ZrO(OH)_2$. The method preferably comprises the steps of:

- mixing a solution comprising a basic precipitating agent into a solution comprising a Zr source, thereby preparing a synthesis solution; and,
- precipitating the Zr-based catalyst, preferably comprising $ZrO(OH)_2$, from the synthesis solution, thereby obtaining a precipitated Zr-based catalyst.

The method is characterized in that the pH of the synthesis solution is at least 4 and at most 7, for example about 5. In some embodiments, the pH of the synthesis solution is at least 4, for example at least 5. In some embodiments, the pH of the synthesis solution is at most 7, for example at most 6.

A catalyst prepared this way was found to provide a significant improvement on $CO_2$ desorption properties without significant dissolution, as illustrated in the example section. More specifically, the present synthesis method influences the ratio of acid and basic hydroxyl groups and the surface charge property, which is demonstrated herein to cause an additional improvement in catalytic performance.

The Zr-based catalyst comprises Zr, O, and H. The O:Zr atomic ratio is at least 2.1, preferably at least 2.2, for example at least 2.3, for example at least 2.4, for example at least 2.5, for example at least 2.6, for example at least 2.7, for example at least 2.8, for example at least 2.9, for example about 3.0. In some embodiments, the O:Zr atomic ratio is at least 3.0, for example at least 3.5, for example at least 4.0. In some embodiments, the O:Zr atomic ratio is at most 5.0, for example at most 4.9, for example at most 4.8, for example at most 4.7, for example at most 4.6, for example at most 4.5, for example at most 4.4, for example at most 4.3, for example at most 4.2, for example at most 4.1, for example about 4.0. In some embodiments, the O:Zr atomic ratio is at least 2.1 and at most 5.0, for example at least 2.2 and at most 4.9, for example at least 2.3 and at most 4.8, for example at least 2.4 and at most 4.7, for example at least 2.5 and at most 4.6, for example at least 2.6 and at most 4.5, for example at least 2.7 and at most 4.4, for example at least 2.8 and at most 4.3, for example at least 2.9 and at most 4.2, for example at least 2.9 and at most 4.1, for example about 3.5.

A catalyst with this atomic ratio was found to provide a significant improvement on $CO_2$ desorption properties.

The O:Zr atomic ratio is herein defined as the bulk ratio and can be measured by the weight loss of the catalyst between 170°C to 800°C assuming the weight loss is from the loss of hydroxyl groups forming $H_2O$, and the rest of the solids are $ZrO_2$. The weight loss can be measured by Thermalgravimetric analysis (TGA) tested under $N_2$ flow and a temperature rate of between 5 to 20°C/min, preferably 10°C/min, assuming all the weight decrement after a temperature of 180°C forms water and the final solid species above 600-800°C is considered $ZrO_2$.

The Zr-based catalyst comprises $ZrO(OH)_2$. The precipitated Zr-based catalyst comprises at least 90% by weight $ZrO(OH)_2$ compared to the total weight of the precipitated Zr-based catalyst, for example at least 95%, for example at least 98%, for example at least 99%.

A catalyst with this atomic structure was found to provide a significant improvement on $CO_2$ desorption properties, as illustrated in the example section.

In some embodiments, the solution comprising a precipitating agent comprises at least 1.00 M and at most 1.50 M, for example about 1.25 M precipitating agent.

In some preferred embodiments, the basic precipitating agent is a hydroxide, preferably selected from the group comprising: NaOH, $NH_4OH$ ($NH_3*H_2O$), and KOH. Preferably, the basic precipitating agent is NaOH.

In some embodiments, the solution comprising a Zr source comprises at least 2.00 M and at most 4.00 M, for example about 3.00 M Zr source.

In some preferred embodiments, the Zr source is $ZrO(NO_3)_2$. $ZrO(NO_3)_2$ is a common Zr source, and it may be easier to form $ZrO(OH)_2$ compared to $Zr(NO_3)_4$.

In some embodiments, the synthesis solution is prepared by dripping the solution comprising a precipitating agent into the solution comprising a Zr source under stirring. This allows the final pH to be easier controlled. Furthermore, dripping the solution comprising a Zr source into the solution comprising a precipitating agent might irreversibly form a sediment closer to $ZrO_2$ in a basic environment.

In some embodiments, a co-precipitation method is used.

In some preferred embodiments, the method further comprises the step of:

- calcining the precipitated Zr-based catalyst at a calcination temperature Tc.

Preferably, the calcination temperature Tc is at most 400°C, preferably at most 350°C, preferably at most 300°C.

It was found that a calcination step at too high temperatures removed the OH groups and reduced the catalyst to $ZrO_2$, thereby severely reducing the catalytic activity, as illustrated in the example section.

In a second aspect, the present invention provides a Zr-based catalyst for $CO_2$ desorption, prepared using the method according to the first aspect, and embodiments thereof. Preferably, the O:Zr atomic ratio is at least 2.1 or other values as described herein. Preferably, the Zr-based catalyst comprises $ZrO(OH)_2$, preferably at percentages as described herein.

(Preferred) embodiments of the first aspect are also (preferred) embodiments of the second aspect, and vice versa.

Such a catalyst was found to provide a significant improvement on $CO_2$ desorption properties without significant dissolution, as illustrated in the example section.

In some preferred embodiments, the ratio of acidic OH to basic OH in the Zr-based catalyst is at least 0.1 and at most 1.3, preferably at least 0.2 to at most 1.2, preferably at least 0.5 to at most 1.2, preferably at least 0.8 to at most 1.1, preferably about 1.0.

Controlling the ratio of acidic OH to basic OH was found to provide a significant improvement on $CO_2$ desorption properties, as illustrated in the example section.

The ratio of acidic OH to basic OH is preferably measured by Thermogravimetric Analysis (TGA), for example as conducted on a TGA Q500 from TA Instruments. The TGA may be performed under a 10 mL/min $N_2$ atmosphere, with a temperature ramping from 50°C to 150°C for 30 min to make sure all free water is released, and then to 800°C. The temperature ramping rate may be 10°C/min.

In some preferred embodiments, the Zr-based catalyst remains in an amorphous phase upon heating/calcining in ambient/inert until 200-300°C. The inventors have surprisingly found that the best-performing catalysts do not show the tetragonal crystalline t-$ZrO_2$ phase upon heating/calcining in ambient/inert until 200-300°C, but remain in an amorphous phase, whereas inferior catalysts do give clear formation of the t-$ZrO_2$ phase (as measured using classic state of the art powder X-ray diffraction analysis, for example as illustrated in the example section) upon the same thermal treatment. In some preferred embodiments, the Zr-based catalyst comprises at most 20.0 wt% of the tetragonal crystalline t-$ZrO_2$ phase, preferably at most 10.0 wt%, preferably at most 5.0 wt%, preferably at most 2.0 wt%, preferably at most 1.0 wt%, preferably essentially no tetragonal crystalline t-$ZrO_2$ phase, after heating/calcining in ambient/inert until 200-300°C.

In some preferred embodiments, the Zr-based catalyst has a surface charge Zeta potential of at least -25 mV, preferably at least -15 mV, preferably at least -5 mV, for example at least 0 mV, for example at least 5 mV.

Catalysts with such a high surface charge were found to provide improved $CO_2$ desorption properties, as illustrated in the example section.

The Zeta potential is preferably measured on a NanoPlus HD with an Auto-Titrator from Particulate Systems. Typically, 40 mg well-grinded sample powder may be mixed with 40 g ultrapure water, followed by a 20 min ultrasonic treatment. The finely dispersed sample solution may be used for the testing. The Zeta potential may be tested under a pH of 9.3 ±0.2. 0.1 M HCl and 0.1 M NaOH may be used for pH adjustment.

In some preferred embodiments, the Zr-based catalyst comprises other metals, preferably selected from the group comprising: Hf, Ce, or Zn. Other metals than Zr might be used for reasons of cost and/or stability. In some preferred embodiments, the purity of Zr compared to the other metals in the Zr-based catalyst is at least 80%, preferably at least 85%, preferably at least 90%, preferably at least 95%.

Such catalysts were found to also provide suitable catalytic activity.

In a third aspect, the present invention provides a process for $CO_2$ desorption from an amine solvent. The process preferably comprises the steps of:

- providing an $CO_2$-containing amine solution comprising $CO_2$ absorbed in an amine solvent;
- supplying a Zr-based catalyst according to the second aspect, and embodiments thereof, to the $CO_2$-containing amine solution;
- heating the amine solution comprising the Zr-based catalyst to a desorption temperature Td; and,
- desorbing $CO_2$ from the amine solution comprising the Zr-based catalyst during a residence time.

(Preferred) embodiments of the second aspect are also (preferred) embodiments of the third aspect, and vice versa.

The present invention allows to reduce the cost of regeneration of solvents in the absorption/desorption process.

In some preferred embodiments, the Zr-based catalyst acts as a non-solubilized heterogeneous catalyst. The catalyst is typically stable and insolubilized in amine solvent, which makes it easy to be separated and regenerated.

In some preferred embodiments, the amine solvent comprises a primary amine, secondary amine, or tertiary amine. Examples of suitable amines include but are not limited to: monoethanolamine (MEA), 2-amino-2-methyl-1-propanol (AMP), diethanolamine (DEA), diglycolamine (DGA), methyldiethanolamine (MDEA), piperazine (PZ), ammonia, amines, alkanolamines, derivatives and/or combinations thereof. Preferably, the amine solvent comprises monoethanolamine (MEA) or 2-amino-2-methyl-1-propanol (AMP), preferably monoethanolamine (MEA).

In some embodiments, the amine solvent comprises a combination of two or more amines, for example AMP with PZ as a co-solvent. A combination of amines can increase absorption rate and cyclic capacity to reduce energy of regeneration (heat duty), application of high amine solution concentration and minimized degradation.

An AMP/PZ (3 M/1.5 M) ratio is considered to be the preferred ratio. The proper ratio of AMP/PZ can increase the absorption rate and the cyclic capacity while avoiding the precipitation of PZ.

In some embodiments, the amine solvent is present in the amine solution at a molar concentration of at least a 1 M to at most a 10 M, preferably of at least a 2 M to at most an 8 M, preferably of at least a 4 M to at most a 6 M, for example at about a 5 M concentration. These concentrations were found to provide optimal results, as illustrated in the example section.

In some embodiments, the Zr-based catalyst is provided in a concentration of at least 1.0 g to at most 8.0 g, preferably of at least 2.0 g to at most 6.0 g, preferably of at least 2.5 g to at most 4.0 g, for example about 3.0 g Zr-based catalyst per 100 mL amine solution.

These amounts were found to provide optimal results, as illustrated in the example section.

In some embodiments, the desorption temperature Td is at most 500 K, preferably at most 450 K, preferably at most 400K, preferably at most 380 K, preferably about 361 K.

The present invention has the significant advantage that the desorption temperature can be kept low. The boosting of $CO_2$ desorption rate with the catalysts makes it possible for the solvent regeneration process to run under a lower temperature which can significantly decrease the energy cost of PPC and prevent the amine solution from degradation and evaporation.

In some preferred embodiments, the residence time is at least 4 h and at most 168 h, preferably at least 8 h and at most 72 h, preferably at least 16 h and at most 48 h, preferably at least 20 h and at most 36 h, for example about 24 h.

These residence times were found to provide optimal results, as illustrated in the example section.

In a fourth aspect, the present invention provides a process for $CO_2$ absorption and desorption. Preferably, the process comprises the steps of:

- absorbing $CO_2$ in an amine solvent, thereby obtaining a $CO_2$-containing amine solution; and,
- desorbing $CO_2$ from the $CO_2$-containing amine solution using the process according to the third aspect, or embodiments thereof, thereby regenerating the amine solvent.

(Preferred) embodiments of the third aspect are also (preferred) embodiments of the fourth aspect, and vice versa.

The present invention allows to reduce the cost of regeneration of solvents in the absorption/desorption process.

In some embodiments, the process is a batch process. In some more preferred embodiments, the process is a continuous process.

In some embodiments, the process further comprises the step of:

- recycling the Zr-based catalyst into the process.

The catalyst of the present invention has the advantage that it can be easily recycled, particularly since the catalyst typically acts as a non-solubilized heterogeneous catalyst.

In some embodiments, the step of recycling the Zr-based catalyst comprises the step of:

- directly recycling the Zr-based catalyst and amine solvent into the process, by using the Zr-based catalyst and amine solvent in a re-absorption step without separation.

In some embodiments, the step of recycling the Zr-based catalyst comprises the step of:

- removing the Zr-based catalyst from the amine solvent, preferably through filtration;
- washing the Zr-based catalyst with water;
- optionally, centrifuging the Zr-based catalyst;
- drying the Zr-based catalyst; and,
- adding the dried catalyst to an amine solvent.

In a fifth aspect, the present invention provides the use of a Zr-based catalyst, preferably a catalyst according to the second aspect, or embodiments thereof, in a process according to the third or fourth aspect, or embodiments thereof.

(Preferred) embodiments of the second, third, or fourth aspects are also (preferred) embodiments of the fifth aspect, and vice versa.

Use of a Zr-based catalyst as described herein allows for a reduction in size of the desorption column leading to lower CAPEX. Use of a Zr-based catalyst as described herein also allows for a reduction in temperature of $CO_2$ desorption, which in turn leads to lower energy requirements (OPEX), and/or less solvent degradation. For example, desorption at lower temperatures allows for less degradation of the amine(s).

**EXAMPLES**

The following examples serve to merely illustrate the invention and should not be construed as limiting its scope in any way. While the invention has been shown in only some of its forms, it should be apparent to those skilled in the art that it is not so limited but is susceptible to various changes and modifications without departing from the scope of the invention.

Experimental Methods

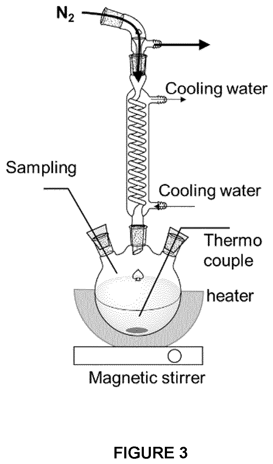

An experimental apparatus for solvent regeneration ($CO_2$ desorption) is shown in **Figure 3.** It consists of a 250 mL round-bottom flask equipped with a thermometer, a heater controlled by a temperature controller, a condenser, a magnetic field stirrer. For a typical $CO_2$ desorption experiment run, 150 mL 5 M MEA solution with initial $CO_2$ loading (0.52 mol/mol) and 3 g catalyst is mixed in the reactor under a 500 mL/min $N_2$ flow from the top of the condenser. Then the solution was heated to 361.1 K in $50 \pm 5$ min and kept constant for 180 min with a stirring rate of 500 rpm. The time when the solution reached 361.1 K is noted as 0 min. For a long time (168 h) $CO_2$ desorption experiment, 6 g $ZrO(OH)_2$ is used in 150 mL 5 M MEA. The $CO_2$ concentration of the solution is analyzed by Chittick equipment with the average absolute relative deviation less than 5%. Typically, 500 $\mu$L $CO_2$ loaded amine solution was added to the flask by a pipette, then 1 mL of 1.5 M $H_2SO_4$ was injected into the solution under a violent stirring. The volume of released $CO_2$ is noted to further calculate the $CO_2$ concentration of the sample. Every sample was tested three times, and the average value was adopted.

The catalysts are evaluated in two aspects: $CO_2$ deposition amount during the temperature ramping stage and the catalytic reaction rate constant ($k_{CAT}$).

The $k_{CAT}$ is calculated as follows:

$$k_{CAT} = k_{overall} - k_{blank}$$

$k_{overall}$ is the overall reaction rate constant calculated through the $CO_2$ concentration of 0 min, 30 min, 60 min, 90 min, 120 min and 180 min after the temperature gets stable ( isothermal stage). $k_{blank}$ is calculated from the changes of the $CO_2$ concentration in MEA solvent without any catalysts during the first 3 h desorption in the isothermal stage. Without specific description, the value of $k_{blank}$ is considered to be $-1.3 *10^{-4}$ $min^{-1}$.

X-ray powder diffraction (XRD) was conducted on a high-throughput STOE STADI P Combi diffractometer in the transmission mode with focusing Ge(111) monochromatic X-ray inlet beams ($\lambda$=1.5406 Å, Cu K$\alpha$ source).

Thermogravimetric analysis (TGA) was conducted on TGA Q500 from TA Instruments. Typically, the TGA was performed under a 10 mL/min $N_2$ atmosphere, with a temperature ramping from 50°C to 150°C for 30 min to make sure all free water is released, and then to 800°C. The temperature ramping rate was 10°C/min.

Zeta potential was tested on NanoPlus HD with an Auto-Titrator from Particulate Systems. Typically, 40 mg well-grinded sample powder was mixed with 40 g ultrapure water, followed by a 20 min ultrasonic treatment. The finely dispersed sample solution was used for the testing. The Zeta potential was tested under a pH of 9.3 $\pm$0.2. 0.1 M HCl and 0.1 M NaOH were used for pH adjustment.

The O:Zr ratio for different pH synthesized Zr-based catalyst samples prepared according to the invention were found to be: 4.27, 4.50, 4.85, 3.39, 2.85, and 2.49.

Example 1: $CO_2$ desorption performance with different catalysts

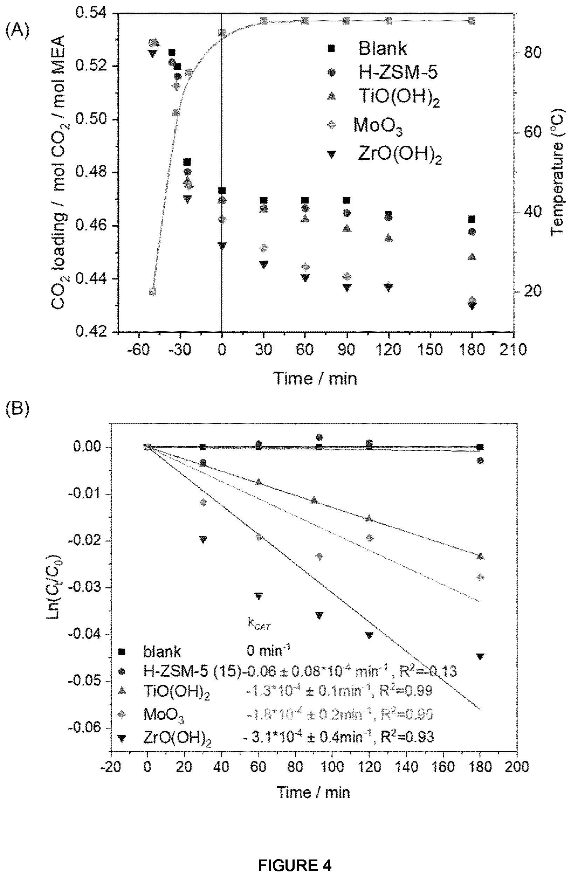

The performance of different catalysts is shown in **Figure 4** and **Table 1.** The O:Zr ratio for these catalysts was between 3:1 and 5:1. Compared with Blank, all three of H-ZSM-5, $TiO(OH)_2$ and $ZrO(OH)_2$ show improvement on $CO_2$ desorption amount during the temperature ramping stage, while $ZrO(OH)_2$ shows 150% improvement on $CO_2$ desorption amount compared to H-ZSM-5 and $TiO(OH)_2$. After the temperature stabilizes, there is no noticeable improvement on $CO_2$ desorption with H-ZSM-5, but $TiO(OH)_2$ and $ZrO(OH)_2$ still show a significant improvement in $CO_2$ desorption rate. A kinetic study on the isothermal stage found that the $k_{CAT}$ value for H-ZSM-5 is almost 0, while $ZrO(OH)_2$ shows the highest $k_{CAT}$ value of $- 3.1*10^{-4}$ $min^{-1}$, which is 2.4 times the value of $TiO(OH)_2$. $MoO_3$ shows a very high increment of $CO_2$ desorption amount at the temperature ramping stage but a lower $CO_2$ desorption rate than $ZrO(OH)_2$ at the isothermal stage. The $k_{CAT}$ for $MoO_3$ is only $-1.8*10^{-4}$ $min^{-1}$, which means that the catalytic effect of $MoO_3$ is only about 58% of $ZrO(OH)_2$. To be noted, $MoO_3$ is completely dissolved after the temperature reaches 88°C, but there is no significant dissolution for $ZrO(OH)_2$. Considering the $k_{overall}$ for blank MEA solvent is $-1.3 *10^{-4}$ $min^{-1}$, using $ZrO(OH)_2$ provides a 238% improvement on the reaction rate constant of the $CO_2$ desorption from MEA at 88°C.

**Table 1**

| CO$_2$ desorption Performance with Different Catalysts Summary | | |
|---|---|---|
| Catalyst | CO$_2$ desorption amount (mmol) | $k_{CAT}$ ($*10^{-4}$ min$^{-1}$) |
| Blank | 41.0 | 0 |
| H-ZSM-5 | 43.6 | -0.06 |
| TiO(OH)$_2$ | 48.9 | -1.3$\pm$0.2 |
| MoO$_3$ | 56.0 | -1.8 |
| ZrO(OH)$_2$ | 48.9 | -3.1$\pm$0.2 |

Reaction condition: 3 g of catalyst, 150 mL CO$_2$-saturated 5 M MEA, N$_2$ flow of 0.5 L/min from the top of the condenser, 88°C. The CO$_2$ desorption amount is calculated at the end of the temperature ramping stage.

Example 2: CO$_2$ desorption performance for different catalyst amounts

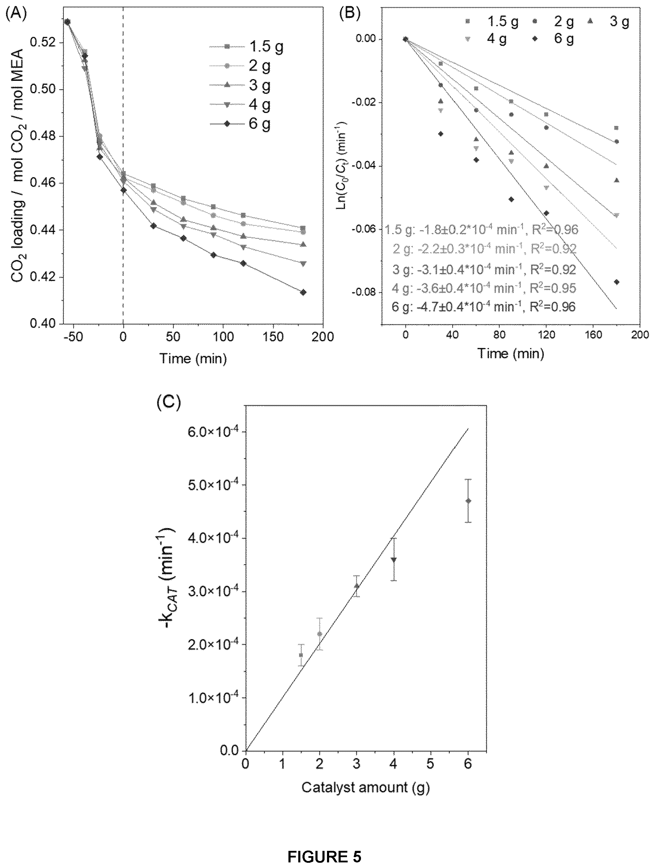

CO$_2$ desorption performance with different ZrO(OH)$_2$ amounts is shown in **Figure 5** and **Table 2.** The CO$_2$ desorption amount during the temperature ramping stage increased with the amount of the catalyst. The $k_{CAT}$ in the isothermal stage and the catalyst amount show a linear relationship when the catalyst amount is below 4 g. However, when the catalyst amount increased to 6 g, the $k_{CAT}$ is no longer increased linearly but relatively lower due to the mass transfer limitation.

**Table 2**

| CO$_2$ desorption Performance with Different ZrO(OH)$_2$ Loading Amount | | |
|---|---|---|
| ZrO(OH)$_2$ Amount (g) | CO$_2$ desorption amount (mmol) | $k_{CAT}$ ($*10^{-4}$ min$^{-1}$) |
| 0 | 41.0 | 0 |
| 1.5 | 47.6 | -1.8$\pm$0.2 |
| 2 | 48.9 | -2.2$\pm$0.3 |
| 3 | 48.9 | -3.1 $\pm$0.2 |
| 4 | 50.0 | -3.6$\pm$0.4 |
| 6 | 52.8 | -4.7$\pm$0.4 |

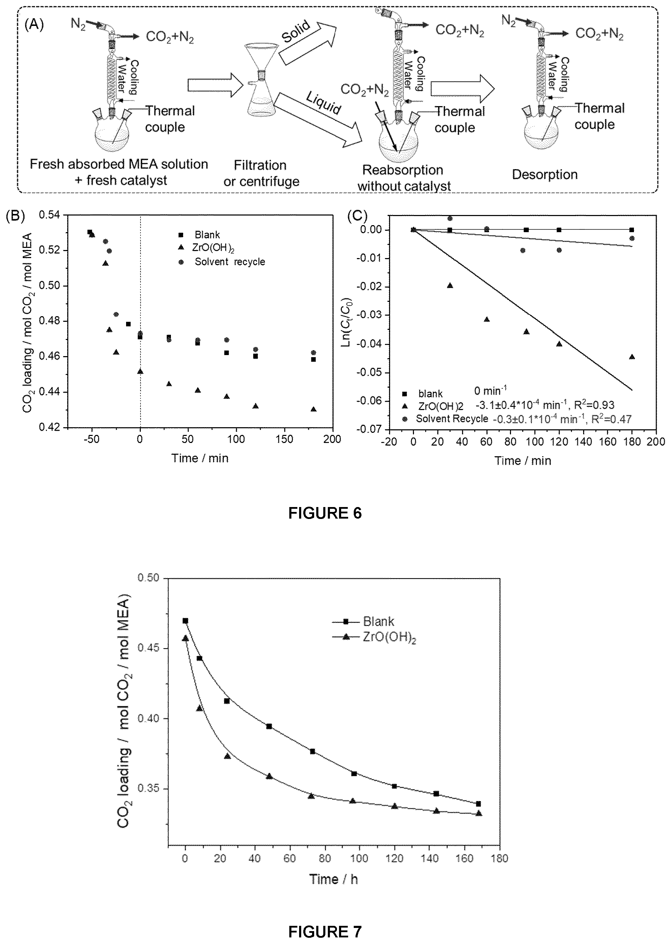

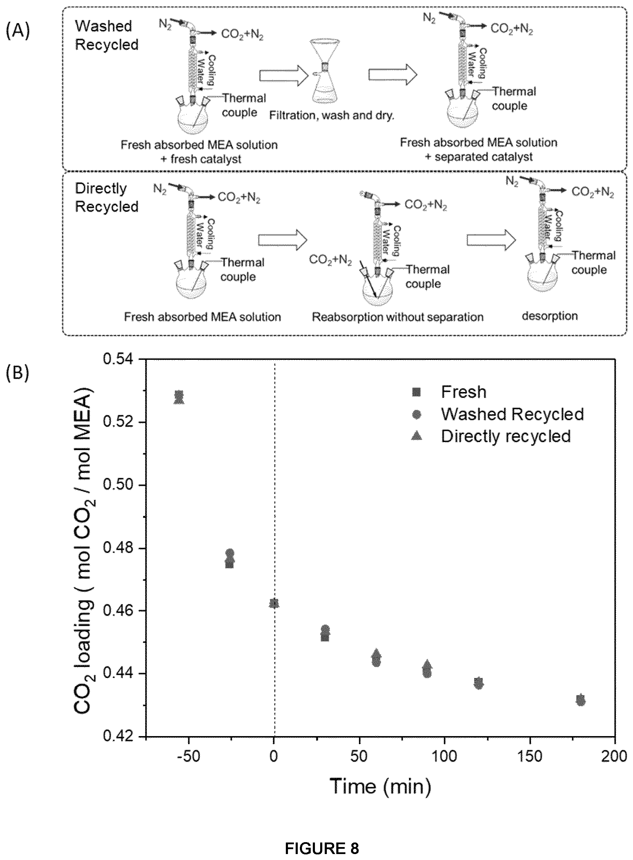

Reaction condition: 150 mL CO$_2$-saturated 5 M MEA, N$_2$ flow of 0.5 L/min from the top of the condenser, 88°C. The CO$_2$ desorption amount is calculated at the end of the temperature ramping stage.
To confirm that the active sites of ZrO(OH)$_2$ do come from the solid phase instead of the solubilized species, the solid phase ZrO(OH)$_2$ was removed from the MEA solution by centrifuge after a typical CO$_2$ desorption reaction, and the remaining MEA solution was collected, re-absorbed with CO$_2$, and went for another desorption test without any catalyst, noted as "solvent recycle". The experimental scheme and results are shown in **Figure 6.** The removal of the catalyst ceases the catalytic effect as the desorption performance shows no noticeable difference with the blank. The desorption rate constant decreased by more than 90% than that of ZrO(OH)$_2$.
In a long-time desorption experiment **(Figure 7),** ZrO(OH)$_2$ improved almost 70% CO$_2$ desorption amount compared with blank at 24 h. After that, due to the thermodynamic limitation, the CO$_2$ desorption rate with ZrO(OH)$_2$ was suppressed, and the CO$_2$ concentration of the solution approached the blank and finally reached a similar level after 168 h. This also indicates that the CO$_2$ desorption with ZrO(OH)$_2$ is not a stoichiometric reaction but a catalytic reaction.
A catalyst regeneration test was also carried out in two ways: water washed regeneration and directly recycled. The scheme for the two methods is shown in **Figure 8A.** For washed recycled, the spent ZrO(OH)$_2$ is washed with water, centrifuged, and dried under 100°C overnight, then used in a new CO$_2$ desorption test. For directly recycled, the reacted mixture (lean MEA solution and ZrO(OH)$_2$) directly went for a re-absorption followed by the desorption process. As shown in **Figure 8B,** both directly recycled and water washed recycled ZrO(OH)$_2$ show similar CO$_2$ desorption performance as the fresh ZrO(OH)$_2$. The result indicate that ZrO(OH)$_2$ is not a one-time catalyst and can be easily recycled.

Example 3: Effect of synthesis pH on catalyst synthesis

A typical ZrO(OH)$_2$ is synthesized through a precipitation method. NaOH solution was dripped into a ZrO(NO$_3$)$_2$ solution until pH reached 5 under a violent stirring. After ageing for 3 h, the sediment was centrifuged and washed three times, then dried at 100°C for 48 h. The outstanding catalytic performance of $ZrO(OH)_2$ on $CO_2$ desorption from the amine solvent is due to the carefully controlled synthesis process and the finely designed surface property.

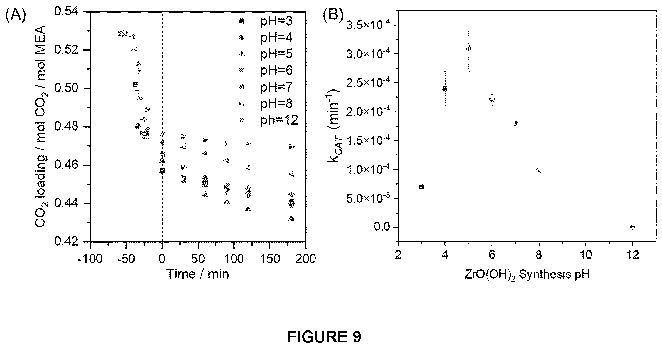

By changing the amount of the basic precipitating agents, the synthesis pH of $ZrO(OH)_2$ can be easily controlled. As shown in **Figure 9** and **Table 3,** $ZrO(OH)_2$ synthesized under different pH showed vastly different catalytic performance.

**Table 3**

| CO₂ desorption Performance With ZrO(OH)₂ Synthesized Under Different pH | | |
|---|---|---|
| $ZrO(OH)_2$ synthesis pH | $CO_2$ desorption amount (mmol) | $k_{CAT}$ ($*10^{-4}$ min$^{-1}$) |
| Blank | 41.0 | 0 |
| 3 | 52.8 | -0.7 |
| 4 | 46.2 | -2.4$\pm$0.2 |
| 5 | 48.9 | -3.1 $\pm$0.2 |
| 6 | 47.6 | -2.2$\pm$0.3 |
| 7 | 46.2 | -1.8 |
| 8 | 41.0 | -1.0 |
| 12 | 38.3 | 0 |

Reaction condition: 3 g of catalyst, 150 mL $CO_2$-saturated 5 M MEA, $N_2$ flow of 0.5 L/min from the top of the condenser, 88°C. The $CO_2$ desorption amount is calculated at the end of the temperature ramping stage.

The relationship between $k_{CAT}$ and the synthesis pH shows a volcano curve, where $k_{CAT}$ reaches the maximum with $3.1*10^{-4}$ min$^{-1}$ at a synthesis pH of 5. When the synthesis pH went either higher or lower, an apparent drop in $k_{CAT}$ appears. To be noted, $ZrO(OH)_2$ synthesized under lower pH like pH 3 shows a high $CO_2$ desorption amount during the temperature ramping stage with very low catalytic effect ($k_{caT}$= $-0.7*10^{-4}$ min$^{-1}$), which indicated that the improvement might be due to the remaining acid during the synthesis process.

Example 4: Effect of synthesis method on catalyst synthesis

This example compares the catalytic performance of $ZrO(OH)_2$ synthesized by a method according to an embodiment of the invention, and $ZrO(OH)_2$ synthesized from a reported synthesis method for metal hydroxyl oxide.

Following the reported method of synthesis of high-performance $TiO(OH)_2$, $ZrO(OH)_2$ (iso) catalysts were synthesized. Zirconium isopropoxide was added into deionized water with a molar ratio of $H_2O$:Zr being 1400:1, followed by stirring for 4h. The precipitate powder was filtered, rinsed three times with deionized water and ethanol, then dried at 100°C for ~10h.

The $ZrO(OH)_2$ can also be synthesized through a hydrothermal method. $ZrO(NO_3)_2$ was mixed in a water-ethanol solvent, and kept at 80°C and circulated for 2 h. The precipitate powder was then filtered, rinsed three times with deionized water, and dried at 100°C for ~10h. The dried powder is noted as $ZrO(OH)_2$ (hydro).

**Table 4**

| CO₂ desorption Performance With ZrO(OH)₂ Synthesized With Different Methods | | |
|---|---|---|
| Catalysts | $CO_2$ desorption amount (mmol) | $k_{CAT}$ ($*10^{-4}$ min$^{-1}$) |
| Blank | 41.0 | 0 |
| $TiO(OH)_2$ | 48.9 | -1.3$\pm$0.2 |
| $ZrO(OH)_2$ | 48.9 | -3.1 $\pm$0.2 |
| $ZrO(OH)_2$ (iso) | 47.6 | -1.6 |
| $ZrO(OH)_2$ (hydro) | 51.5 | 0.9 |

Reaction condition: 3 g of catalyst, 150 mL $CO_2$-saturated 5 M MEA, $N_2$ flow of 0.5 L/min from the top of the condenser, 88°C. The $CO_2$ desorption amount is calculated at the end of the temperature ramping stage.

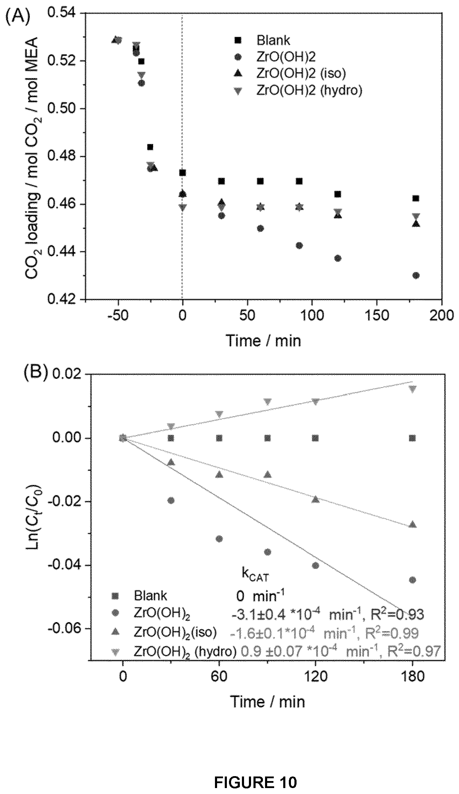

The catalytic performance of $ZrO(OH)_2$ synthesized with different methods for $CO_2$ desorption is shown in **Table 4 and Figure 10.** Although $ZrO(OH)_2$ (hydro) shows the highest $CO_2$ desorption amount during the temperature ramping stage, it shows a $k_{CAT}$ of $0.9 * 10^{-4}$ min$^{-1}$, which has an even negative effect on the $CO_2$ desorption rate during the isothermal stage. $ZrO(OH)_2$ (iso) shows a similar improvement on $CO_2$ desorption amount as $ZrO(OH)_2$ does. During the

temperature ramping stage, the $k_{CAT}$ value for $ZrO(OH)_2$(iso) is -1.6*10$^{-4}$ min$^{-1}$, which is only 51% of $ZrO(OH)_2$ but still higher than that of $TiO(OH)$ (1.3*10$^{-4}$ min$^{-1}$). The result further proves the advantage of the current synthesis methods and shows that the $ZrO(OH)_2$ itself is more suitable for $CO_2$ desorption than $TiO(OH)_2$.

Example 5: Effect of hydroxyl groups

The hydroxyl groups for $ZrO(OH)_2$ are believed to show either acidity or basicity depending on the binding type. Mono-binding -OH can be considered as weak bases. It has lower binding energy with Zr and can be removed at a lower temperature (below 400°C). While for bridged-binding -OH groups, they have a stronger binding with Zr and can be considered weak B acid. The removal temperature for bridged-binding -OH is relative higher (400-600°C).

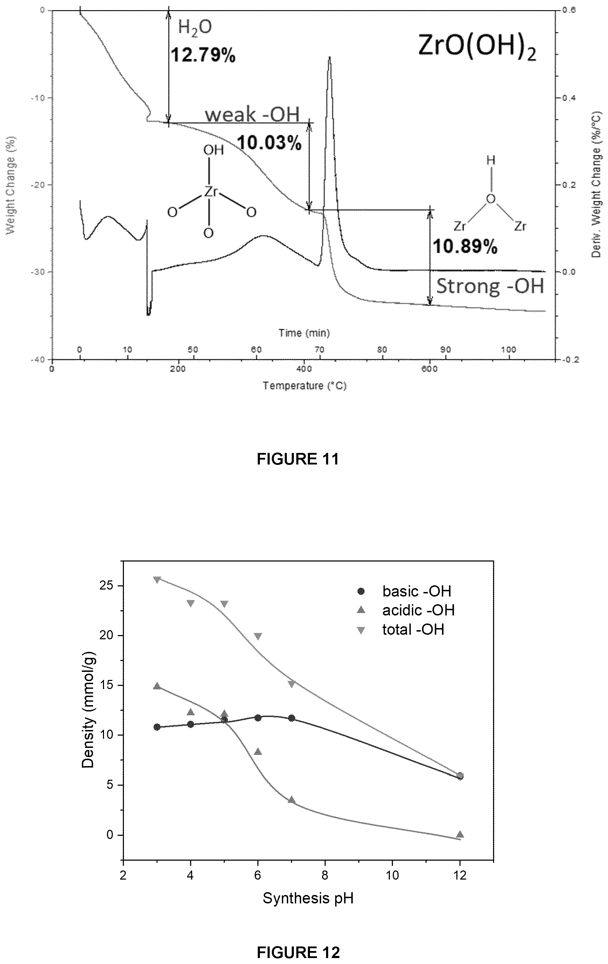

Since the hydroxyl group is releasing as $H_2O$ with the raising of the temperature, the hydroxyl groups amount can be quantified by TGA. A typical TGA result for $ZrO(OH)_2$ is shown in **Figure 11.** The water released between 200°C ~400°C is considered to be from weak bonding -OH (basic -OH), and the water released between 400°C to 600°C is considered to come from strong bonding -OH (acidic -OH).

The hydroxyl group density for $ZrO(OH)_2$ synthesized under different pH values is shown in **Figure 12.** It can be seen that the synthesis pH has a significant influence on the -OH group. When the synthesis pH increased from 3 to 5, the total density of the hydroxyl group only slightly decreased from 25.7 mmol/g to 23.3 mmol/g, with a slight increase of basic -OH (from 10.8 to 11.6 mmol/g) and a decrease of acidic -OH (from 14.9 to 12.1 mmol/g). When the synthesis pH further increased from 5 to 7, both total -OH density and acidic -OH decreased significantly, but basic -OH remained almost not changed. By further increasing the pH to 12, the drop on both types of -OH density occurred.

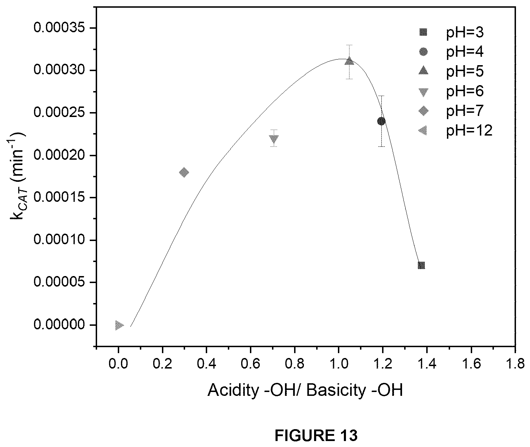

A volcano curve relationship between $k_{CAT}$ and the basic/acid -OH ratio is shown in **Figure 13.** The $k_{CAT}$ reaches the top when the basic and acidic -OH ratio is close to 1.0. The results indicate that there is a synergetic effect between acidic and basic -OH; thus controlling the basic and acidic -OH ratio of the catalysts may be one of the critical factors for the high-performance $ZrO(OH)_2$.

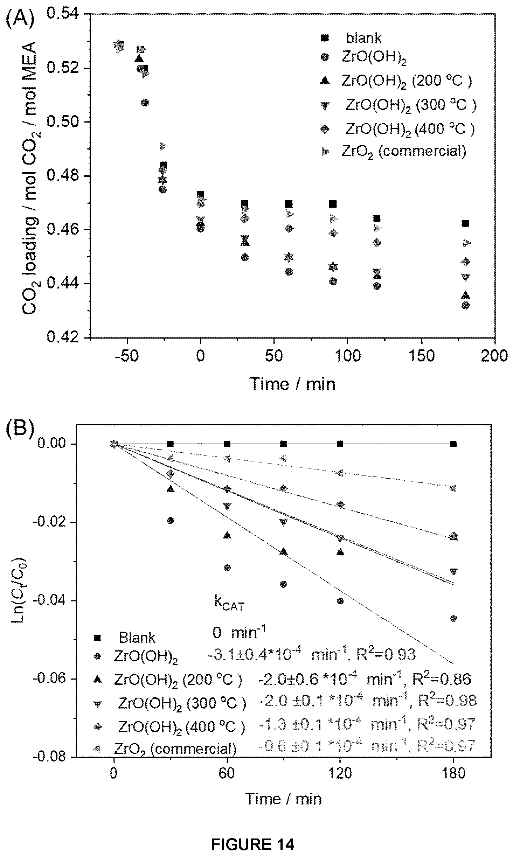

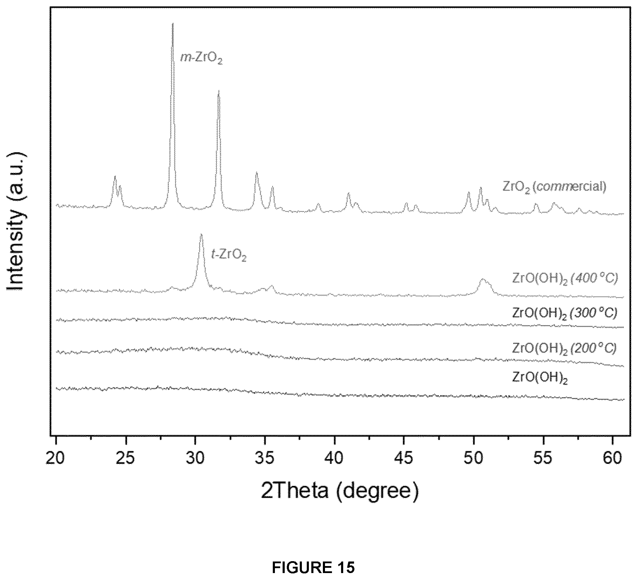

To further prove the importance of the hydroxyl group of the catalyst, $ZrO(OH)_2$ is calcined from 200°C to 600°C to partly remove the -OH group from $ZrO(OH)_2$. From **Figure 14** and **Table 5,** it can be seen that the $CO_2$ desorption amount at the temperature ramping step decreased with the increasing calcination temperature. However, $ZrO(OH)_2$ calcined at 200°C and 300°C only shows a slight decrease in catalytic performance. By further increasing the calcining temperature to 400°C, the $k_{CAT}$ further drops to -1.3*10$^{-4}$ min$^{-1}$. The XRD results **(Figure 15)** show that below 400°C calcination, $ZrO(OH)_2$ remained amorphous and after a 400°C-calcination, the $ZrO(OH)_2$ crystalized and formed t-$ZrO_2$ with a crystal size of 30nm. However, compared to commercial $ZrO_2$, $ZrO(OH)_2$ (400°C) shows a twofold $k_{CAT}$. The better performance of the $ZrO(OH)_2$ compared with $ZrO_2$ may be due to the higher density of the hydroxyl groups, which makes it a better catalyst than $ZrO_2$. On the other hand, by calcining $ZrO(OH)_2$ under a temperature of 300°C, a more stable catalyst can be achieved with only a slight drop in catalytic performance. The O:Zr ratio for $ZrO(OH)_2$ (400°C) was 2.17:1, while for the other catalysts it was higher than 3:1.

**Table 5**

| CO$_2$ desorption Performance With ZrO(OH)$_2$ Calcined under different temperature | | |
| --- | --- | --- |
| Catalysts (calcination temperature) | CO$_2$ desorption amount (mmol) | $k_{CAT}$ (*10$^{-4}$ min$^{-1}$) |
| Blank | 41.0 | 0 |
| ZrO(OH)$_2$ | 48.9 | -3.1 ±0.2 |
| ZrO(OH)$_2$ (200°C) | 48.9 | -2.3 |
| ZrO(OH)$_2$ (300°C) | 47.6 | -2.0 |
| ZrO(OH)$_2$ (400°C) | 43.6 | -1.4 |
| ZrO$_2$ (commercial) | 42.3 | -0.6 |

Reaction condition: 3 g of catalyst, 150 mL $CO_2$-saturated 5 M MEA, $N_2$ flow of 0.5 L/min from the top of the condenser, 88°C. The $CO_2$ desorption amount is calculated at the end of the temperature ramping stage.

Example 6: Catalytic Performance of Mixed Metal Hydroxyl Oxide

Mixed Metal hydroxyl oxides are investigated based on the $ZrO(OH)_2$. Typically, 10% of the metal nitrate is mixed with Zirconium precursor, followed by the same synthesis method with $ZrO(OH)_2$. The catalyst is noted as 10% MZrO(OH)$_2$, (M=Hf, Ce, Zn).

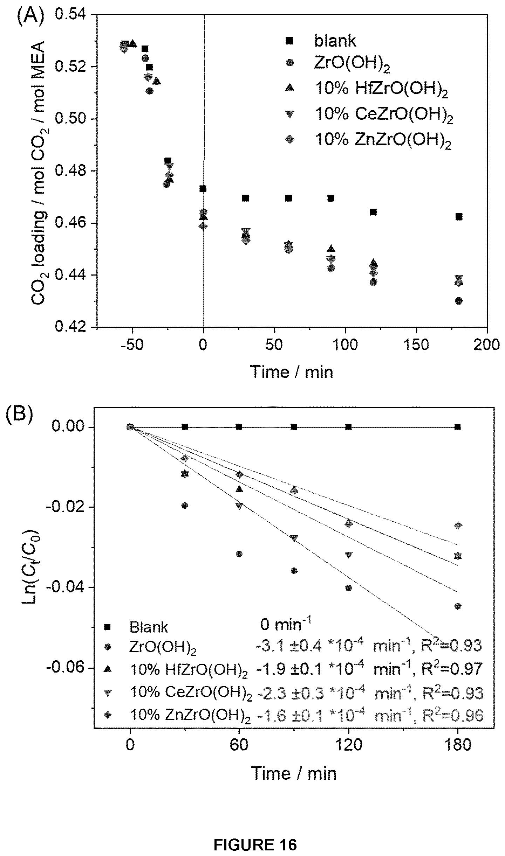

As shown in **Figure 16** and **Table 6,** 10%ZnZrO(OH)$_2$ showed 25% improvement on $CO_2$ desorption amount compared with the blank, which had a 10% improvement to $ZrO(OH)_2$. However, the $k_{CAT}$ of 10%ZnZrO(OH)$_2$ is only

-1.6*10$^{-4}$ min$^{-1}$, which is lower than 10%HfZrO(OH)$_2$ (-1.9*10$^{-4}$ min$^{-1}$), and 10%CeZrO(OH)$_2$ (-2.3*10$^{-4}$ min$^{-1}$). ZrO(OH)$_2$ still shows the highest $k_{CAT}$ of -3.1*10$^{-4}$ min$^{-1}$. To be noted, even for the lowest $k_{CAT}$ of 10%MZrO(OH)$_2$, which is 10% ZnZrO(OH)$_2$, it still shows a 25% improvement to the $k_{CAT}$ of TiO(OH)$_2$.

**Table 6**

CO$_2$ desorption Performance With Different MZrO(OH)$_2$

| Catalysts | CO$_2$ desorption amount (mmol) | $k_{CAT}$ (*10$^{-4}$ min$^{-1}$) |
|---|---|---|
| Blank | 41.0 | 0 |
| ZrO(OH)$_2$ | 48.9 | -3.1±0.2 |
| 10%HfZrO(OH)$_2$ | 48.9 | -1.9 |
| 10%CeZrO(OH)$_2$ | 47.6 | -2.3 |
| 10%ZnZrO(OH)$_2$ | 51.5 | -1.6 |
| TiO(OH)$_2$ | 48.9 | -1.3±0.2 |

Reaction condition: 3 g of catalyst, 150 mL CO$_2$-saturated 5 M MEA, N$_2$ flow of 0.5 L/min from the top of the condenser, 88°C. The CO$_2$ desorption amount is calculated at the end of the temperature ramping stage.

Example 7: Surface Charge Of the ZrO(OH)$_2$ Based Catalysts

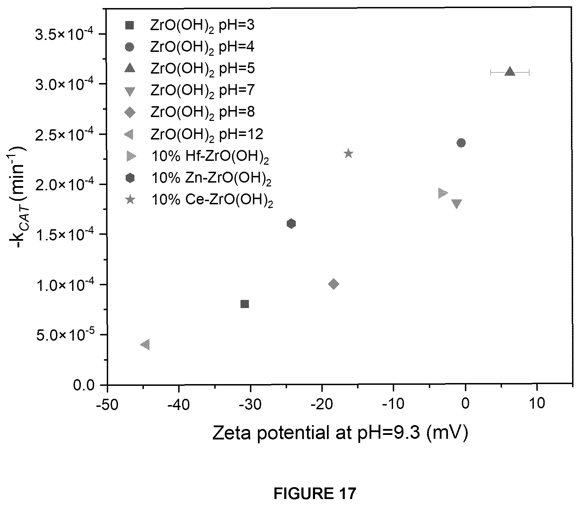

The surface charge of the ZrO(OH)$_2$ based catalysts are tested through a Zeta potential analyzer under pH 9.3, which is the typical pH of the CO$_2$-MEA solvent during the desorption. The value of Zeta potential reflects the charge property of the particles' surface. A positive Zeta potential indicates that the particle's surface is positively charged, and the absolute value for the Zeta potential reflects the density of the charges. **Figure 17** shows a clear relationship between the $k_{CAT}$ and the Zeta potential of the ZrO(OH)$_2$. The higher the Zeta potential is, the higher the catalytic effect is achieved. The higher Zeta potential results in a higher concentration of carbamate species adsorbed on the surface of the catalyst, which is favorable for the carbamate breakdown step and results in showing a higher catalytic effect.

Example 7: CO$_2$ desorption performance with ZrO(OH)$_2$ in 2.5 M CO$_2$-Saturated AMP Solution 2-amino-2-methyl-1-propanol (AMP) has been proposed as a commercially attractive new CO$_2$ absorbent because of its advantages in absorption capacity, absorption rate, degradation resistance, and regeneration energy.

**Table 7**

CO$_2$ desorption Performance With and Without Different Catalysts

| Catalyst | CO$_2$ desorption amount (mmol) | $k_{CAT}$ (*10$^{-4}$ min$^{-1}$) |
|---|---|---|
| Blank | 110 | 0 |
| TiO(OH)$_2$ | 115 | -1.3 |
| ZrO(OH)$_2$ | 116 | -4.6 |

Reaction condition: 3 g of catalyst, 150 mL CO$_2$-saturated 2.5 M AMP, N$_2$ flow of 0.5 L/min from the top of the condenser, 88°C. The CO$_2$ desorption amount is calculated at the end of the temperature ramping stage.

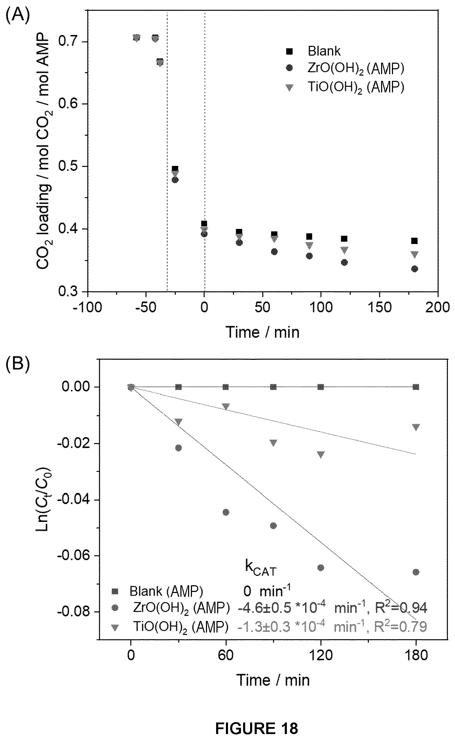

To show the CO$_2$ desorption performance with ZrO(OH)$_2$ catalyst in other amine solvents, a CO$_2$ desorption experiment was conducted in a CO$_2$-saturated 2.5 M AMP solution. The CO$_2$ desorption performance is shown in **Figure 18** and **Table 7.** AMP already showed a very high desorption rate without any catalysts. The $k_{blank}$ of AMP is -4.8*10$^{-4}$ min$^{-1}$ which is about three times compared with that of MEA. However, ZrO(OH)$_2$ still shows improvement in both the temperature ramping stage and the isothermal stage. And compared with TiO(OH)$_2$ (-1.3*10$^{-4}$min$^{-1}$), the $k_{CAT}$ of ZrO(OH)$_2$ showed a 250% improvement. The results proved that ZrO(OH)$_2$ does not only work well in MEA solvent, but can also be applied in other amine solvents for boosting the CO$_2$ desorption rate under low temperature.

Example 8: industrial desorption process

To simulate the continual desorption process in industry, the catalyst is also tested in a self-built continual reactor (see **Figure 19,** and a zoomed in section in **Figure 20).** The CO$_2$-rich amine solution was fed over the catalysts bed from the bottom at a flow rate of 3.4 mL min$^{-1}$ under 85 °C. CO$_2$ released from the amine solution was carried out to the analysis system by N$_2$ flow blowing from the top of the liquid level. The CO$_2$ desorption flowrate is calculated by the intensity of m/z=44 signal from mass spectroscopy (MS). The results were double checked by titrating $CO_2$-lean amine solution.

The calculation methods are shown as followed:

The $CO_2$ desorption rate calculated through MS:

$$CO_2\ (\%) = A * I$$

$$F_{CO2} = \frac{F_{N2} \times CO_2\ (\%)}{1 - CO_2(\%)}$$

$I$: $CO_2$ signal intensity from MS
$A$: Calibration factors of MS signal (%)
$CO_2$ (%): $CO_2$ concentration (%)
$F_{N2}$: $N_2$ flow rate (mL/min)
$F_{CO2}$: released $CO_2$ flow rate (mL/min)

The $CO_2$ desorption rate is also checked through titrating liquid samples after reaction, which is calculated as below:

$$F_{CO2} = (ct - c0) \times F_{MEA}$$

$ct$: $CO_2$ concentration in the reacted solution ($mL_{CO2}/mL_{CO2}$)
$c0$: $CO_2$ concentration in the fresh solution ($mL_{CO2}/mL_{CO2}$)
$F_{MEA}$: Flow rate of MEA solution

**Table 8** shows the results of $CO_2$ desorption rate in continual reactor with different catalysts. The test without catalyst (called blank) contained glass beads of comparable size as that of the catalysts, which showed a relative low $CO_2$ desorption rate by 9.7 mL/min. By using $TiO(OH)_2$, the $CO_2$ desorption rate increased to 21.0 mL/min. The $CO_2$ desorption rate with $ZrO(OH)_2$ is 35.50 mL/min, which showed 266% improvement compared with that of the blank and 69% compared with $TiO(OH)_2$.

**Table 8.** $CO_2$ desorption rate and cycling capacity with different catalysts

| Catalysts | $CO_2$ desorption rate (mL/min) |
|---|---|
| Blank | 9.7 |
| $TiO(OH)_2$ | 21.0 |
| $ZrO(OH)_2$ | 35.50 |

Reaction condition: $N_2$: 100 mL/min, $CO_2$ saturated MEA solution flow: 3.4 mL/min, 85 °C, 3 cm catalyst.

**Figures 19 and 20** use following reference numbers: 101 - Liquid sampling; 111 - Rich amine tank; 112 - Lean amine tank; 121 - Pump; 122 - Coriolis circular heat exchanger; 123 - Heated transfer line; 124 - Drain valve; 125 - Heating laboratory bath; 126 - Cold finger trap; 127 - Process cooling water; 128 - Variable vacuum pump; 129 - Flow indicator; 130 - Catalyst; 140 - Mass spectroscopy.

**Claims**

1. A method for preparing a Zr-based catalyst for $CO_2$ desorption, the method comprising the steps of:

   - mixing a solution comprising a basic precipitating agent into a solution comprising a Zr source, thereby preparing a synthesis solution; and,
   - precipitating the Zr-based catalyst from the synthesis solution, thereby obtaining a precipitated Zr-based catalyst;

   **characterized in that** the pH of the synthesis solution is at least 4 and at most 7, for example about 5; and **in that** the Zr-based catalyst comprises Zr, O, and H, wherein the O:Zr atomic ratio is at least 2.1; and wherein the precipitated Zr-based catalyst comprises at least 90% by weight $ZrO(OH)_2$ compared to the total weight of the precipitated Zr-based catalyst.

2. The method according to claim 1, wherein the Zr-based catalyst comprises $ZrO(OH)_2$, and wherein the ratio of acidic OH to basic OH of the Zr-based catalyst is at least 0.1 and at most 1.3.

3. The method according any one of claims 1 or 2, wherein the precipitated Zr-based catalyst comprises at least 95% by weight $ZrO(OH)_2$ compared to the total weight of the precipitated Zr-based catalyst.

4. The method according to any one of claims 1 to 3, wherein the basic precipitating agent is a hydroxide; and/or wherein the Zr source is $ZrO(NO_3)_2$.

5. The method according to any one of claims 1 to 4, further comprising the additional step of:

    - calcining the precipitated Zr-based catalyst at a calcination temperature Tc;

    wherein the calcination temperature Tc is at most 300°C.

6. A Zr-based catalyst for $CO_2$ desorption, prepared using the method according to any one of claims 1 to 5, wherein the O:Zr atomic ratio is at least 2.1; preferably wherein the Zr-based catalyst comprises $ZrO(OH)_2$; and wherein the Zr-based catalyst comprises at least 90% by weight $ZrO(OH)_2$ compared to the total weight of the Zr-based catalyst.

7. The Zr-based catalyst according to claim 6, wherein the ratio of acidic OH to basic OH of the Zr-based catalyst is at least 0.1 and at most 1.3.

8. The Zr-based catalyst according to any one of claims 6 or 7, wherein the Zr-based catalyst has a surface charge Zeta potential of at least -25 mV, preferably at least -5 mV.

9. The Zr-based catalyst according to any one of claims 6 to 8, wherein the Zr-based catalyst comprises other metals selected from the group comprising: Hf, Ce, or Zn; preferably wherein the purity of Zr compared to the other metals in the Zr-based catalyst is at least 90%.

10. A process for $CO_2$ desorption from an amine solvent, the process comprising the steps of:

    - providing an $CO_2$-containing amine solution comprising $CO_2$ absorbed in an amine solvent;
    - supplying a Zr-based catalyst according to any one of claims 6 to 9 to the $CO_2$-containing amine solution;
    - heating the amine solution comprising the Zr-based catalyst to a desorption temperature Td; and,
    - desorbing $CO_2$ from the amine solution comprising the Zr-based catalyst during a residence time.

11. The process according to claim 10, wherein the Zr-based catalyst acts as a non-solubilized heterogeneous catalyst.

12. The process according to any one of claims 10 or 11, wherein the amine solvent comprises monoethanolamine (MEA) or 2-amino-2-methyl-1-propanol (AMP), preferably monoethanolamine (MEA).

13. The process according to any one of claims 10 to 12, wherein the residence time is at least 4 h and at most 168 h, preferably at least 20 h and at most 36 h.

14. A process for $CO_2$ absorption and desorption, comprising the steps of:

    - absorbing $CO_2$ in an amine solvent, thereby obtaining a $CO_2$-containing amine solution; and,
    - desorbing $CO_2$ from the $CO_2$-containing amine solution using the process of any one of claims 10 to 13, thereby regenerating the amine solvent.

15. Use of a Zr-based catalyst, preferably a catalyst according to any one of claims 6 to 9, in the process according to any one of claims 10 to 14.

**Patentansprüche**

1.  Verfahren zum Herstellen eines Katalysators auf Zr-Basis für die $CO_2$-Desorption, wobei das Verfahren die Schritte umfasst von:

    - Mischen einer Lösung, die ein basisches Fällungsmittel umfasst, in eine Lösung, die eine Zr-Quelle umfasst, wodurch eine Syntheselösung hergestellt wird; und,
    - Fällen des Katalysators auf Zr-Basis aus der Syntheselösung, wodurch ein gefällter Katalysator auf Zr-Basis erhalten wird;

    **dadurch gekennzeichnet, dass** der pH-Wert der Syntheselösung mindestens 4 und höchstens 7, beispielsweise etwa 5, beträgt; und dass der Katalysator auf Zr-Basis Zr, O und H umfasst, wobei das Atomverhältnis O:Zr mindestens 2,1 beträgt; und wobei der gefällte Katalysator auf Zr-Basis mindestens 90 Gew.-% $ZrO(OH)_2$ im Vergleich zum Gesamtgewicht des gefällten Katalysators auf Zr-Basis umfasst.

2.  Verfahren gemäß Anspruch 1, wobei der Katalysator auf Zr-Basis $ZrO(OH)_2$ umfasst, und wobei das Verhältnis von saurem OH zu basischem OH des Katalysators auf Zr-Basis mindestens 0,1 und höchstens 1,3 beträgt.

3.  Verfahren gemäß einem der Ansprüche 1 oder 2, wobei der gefällte Katalysator auf Zr-Basis mindestens 95 Gew.-% $ZrO(OH)_2$ im Vergleich zum Gesamtgewicht des gefällten Katalysators auf Zr-Basis umfasst.

4.  Verfahren gemäß einem der Ansprüche 1 bis 3, wobei das basische Fällungsmittel ein Hydroxid ist; und/oder wobei die Zr-Quelle $ZrO(NO_3)_2$ ist.

5.  Verfahren gemäß einem der Ansprüche 1 bis 4, das ferner den zusätzlichen Schritt umfasst von:

    - Kalzinieren des gefällten Katalysators auf Zr-Basis bei einer Kalzinierungstemperatur Tc;

    wobei die Kalzinierungstemperatur Tc höchstens 300 °C beträgt.

6.  Katalysator auf Zr-Basis für die $CO_2$-Desorption, hergestellt unter Verwendung des Verfahrens gemäß einem der Ansprüche 1 bis 5, wobei das O:Zr-Atomverhältnis mindestens 2,1 beträgt; vorzugsweise wobei der Katalysator auf Zr-Basis $ZrO(OH)_2$ umfasst; und wobei der Katalysator auf Zr-Basis mindestens 90 Gew.-% $ZrO(OH)_2$ im Vergleich zum Gesamtgewicht des Katalysators auf Zr-Basis umfasst.

7.  Katalysator auf Zr-Basis gemäß Anspruch 6, wobei das Verhältnis von saurem OH zu basischem OH des Katalysators auf Zr-Basis mindestens 0,1 und höchstens 1,3 beträgt.

8.  Katalysator auf Zr-Basis gemäß einem der Ansprüche 6 oder 7, wobei der Katalysator auf Zr-Basis ein Oberflächenladungs-Zeta-Potenzial von mindestens -25 mV, vorzugsweise mindestens -5 mV, aufweist.

9.  Katalysator auf Zr-Basis gemäß einem der Ansprüche 6 bis 8, wobei der Katalysator auf Zr-Basis andere Metalle umfasst, ausgewählt aus der Gruppe, die umfasst: Hf, Ce oder Zn; vorzugsweise wobei die Reinheit von Zr im Vergleich zu den anderen Metallen in dem Katalysator auf Zr-Basis mindestens 90 % beträgt.

10. Prozess zur $CO_2$-Desorption aus einem Aminlösungsmittel, wobei der Prozess die Schritte umfasst von:

    - Bereitstellen einer $CO_2$-haltigen Aminlösung, die in einem Aminlösungsmittel absorbiertes $CO_2$ umfasst;
    - Zuführen eines Katalysators auf Zr-Basis gemäß einem der Ansprüche 6 bis 9 zu der $CO_2$-haltigen Aminlösung;
    - Erwärmen der Aminlösung, die den Katalysator auf Zr-Basis umfasst, auf eine Desorptionstemperatur Td; und,
    - Desorbieren von $CO_2$ aus der Aminlösung, die den Katalysator auf Zr-Basis umfasst, während einer Verweilzeit.

11. Prozess gemäß Anspruch 10, wobei der Katalysator auf Zr-Basis als nicht aufgelöster heterogener Katalysator wirkt.

12. Prozess gemäß einem der Ansprüche 10 oder 11, wobei das Aminlösungsmittel Monoethanolamin (MEA) oder 2-Amino-2-methyl-1-propanol (AMP), vorzugsweise Monoethanolamin (MEA), umfasst.

13. Prozess gemäß einem der Ansprüche 10 bis 12, wobei die Verweilzeit mindestens 4 h und höchstens 168 h, vorzugsweise mindestens 20 h und höchstens 36 h beträgt.

14. Prozess zur CO$_2$-Absorption und Desorption, der die Schritte umfasst von:

- Absorbieren von CO$_2$ in einem Aminlösungsmittel, wodurch eine CO$_2$-haltige Aminlösung erhalten wird; und,
- Desorbieren von CO$_2$ aus der CO$_2$-haltigen Aminlösung unter Anwendung des Prozesses gemäß einem der Ansprüche 10 bis 13, wodurch das Aminlösungsmittel regeneriert wird.

15. Verwendung eines Katalysators auf Zr-Basis, vorzugsweise eines Katalysators gemäß einem der Ansprüche 6 bis 9, in dem Prozess gemäß einem der Ansprüche 10 bis 14.

**Revendications**

1. Procédé de préparation d'un catalyseur à base de Zr pour la désorption de CO$_2$, le procédé comprenant les étapes de :

- mélange d'une solution comprenant un agent de précipitation basique dans une solution comprenant une source de Zr, préparant ainsi une solution de synthèse ; et,
- précipitation du catalyseur à base de Zr à partir de la solution de synthèse, obtenant ainsi un catalyseur précipité à base de Zr ;

**caractérisé en ce que** le pH de la solution de synthèse est d'au moins 4 et d'au plus 7, par exemple environ 5 ; et **en ce que** le catalyseur à base de Zr comprend du Zr, de l'O et de l'H, dans lequel le rapport atomique O:Zr est d'au moins 2,1 ; et dans lequel le catalyseur précipité à base de Zr comprend au moins 90 % en poids de ZrO(OH)$_2$ par rapport au poids total du catalyseur précipité à base de Zr.

2. Procédé selon la revendication 1, dans lequel le catalyseur à base de Zr comprend du ZrO(OH)$_2$, et dans lequel le rapport entre les OH acides et les OH basiques du catalyseur à base de Zr est d'au moins 0,1 et d'au plus 1,3.

3. Procédé selon l'une quelconque des revendications 1 ou 2, dans lequel le catalyseur précipité à base de Zr comprend au moins 95 % en poids de ZrO(OH)$_2$ par rapport au poids total du catalyseur précipité à base de Zr.

4. Procédé selon l'une quelconque des revendications 1 à 3, dans lequel l'agent de précipitation basique est un hydroxyde ; et/ou dans lequel la source de Zr est du ZrO(NO$_3$)$_2$.

5. Procédé selon l'une quelconque des revendications 1 à 4, comprenant en outre l'étape additionnelle de :

- calcination du catalyseur précipité à base de Zr à une température de calcination Tc ;

dans lequel la température de calcination Tc est d'au plus 300°C.

6. Catalyseur à base de Zr pour la désorption de CO$_2$, préparé à l'aide du procédé selon l'une quelconque des revendications 1 à 5, dans lequel le rapport atomique O:Zr est d'au moins 2,1 ; de préférence dans lequel le catalyseur à base de Zr comprend du ZrO(OH)$_2$ ; et dans lequel le catalyseur à base de Zr comprend au moins 90 % en poids de ZrO(OH)$_2$ par rapport au poids total du catalyseur à base de Zr.

7. Catalyseur à base de Zr selon la revendication 6, dans lequel le rapport entre les OH acides et les OH basiques du catalyseur à base de Zr est au d'au moins 0,1 et d'au plus 1,3.

8. Catalyseur à base de Zr selon l'une quelconque des revendications 6 ou 7, dans lequel le catalyseur à base de Zr présente un potentiel Zêta de charge de surface d'au moins -25 mV, de préférence au moins -5 mV.

9. Catalyseur à base de Zr selon l'une quelconque des revendications 6 à 8, dans lequel le catalyseur à base de Zr comprend d'autres métaux choisis à partir du groupe comprenant : Hf, Ce, ou Zn ; de préférence dans lequel la pureté du Zr par rapport aux autres métaux dans le catalyseur à base de Zr est d'au moins 90 %.

10. Procédé de désorption de CO$_2$ à partir d'un solvant amine, le procédé comprenant les étapes de :

- mise à disposition d'une solution amine contenant du $CO_2$ comprenant du $CO_2$ absorbé dans un solvant amine ;
- apport d'un catalyseur à base de Zr selon l'une quelconque des revendications 6 à 9 à la solution amine contenant du $CO_2$ ;
- chauffage de la solution amine comprenant le catalyseur à base de Zr à une température de désorption Td ; et,
- désorption du $CO_2$ à partir de la solution amine comprenant le catalyseur à base de Zr pendant un temps de séjour.

11. Procédé selon la revendication 10, dans lequel le catalyseur à base de Zr agit en tant que catalyseur hétérogène non solubilisé.

12. Procédé selon l'une quelconque des revendications 10 ou 11, dans lequel le solvant amine comprend de la monoéthanolamine (MEA) ou du 2-amino-2-méthyl-1-propanol (AMP), de préférence de la monoéthanolamine (MEA).

13. Procédé selon l'une quelconque des revendications 10 à 12, dans lequel le temps de séjour est d'au moins 4 h et d'au plus 168 h, de préférence d'au moins 20 h et d'au plus 36 h.

14. Procédé d'absorption et de désorption de $CO_2$, comprenant les étapes de :

- absorption de $CO_2$ dans un solvant amine, obtenant ainsi une solution amine contenant du $CO_2$ ; et,
- désorption de $CO_2$ à partir de la solution amine contenant du $CO_2$ à l'aide du procédé de l'une quelconque des revendications 10 à 13, régénérant ainsi le solvant amine.

15. Utilisation d'un catalyseur à base de Zr, de préférence un catalyseur selon l'une quelconque des revendications 6 à 9, dans le procédé selon l'une quelconque des revendications 10 à 14.

FIGURE 1

FIGURE 2

FIGURE 3

FIGURE 4

FIGURE 5

FIGURE 6

FIGURE 7

FIGURE 8

FIGURE 9

FIGURE 10

FIGURE 11

FIGURE 12

FIGURE 13

FIGURE 14

FIGURE 15

FIGURE 16

FIGURE 17

(A)

(B)

FIGURE 18

**FIGURE 19**

127

$CO_2$

Tc

$CO_2$

$CO_2$

MFC

N$_2$

MEA + CO2

MEA

FIGURE 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011120138 A
- US 2016030880 A1

- US 20160250591 A1
- US 2010209323 A1